# EUROPÄISCHE PATENTSCHRIFT

(11) **EP 2 496 485 B1**
(45) Veröffentlichungstag und Bekanntmachung des Hinweises auf die Patenterteilung: **21.10.2015**
(21) Anmeldenummer: 10723518.6
(22) Anmeldetag: 21.05.2010
(51) Int. Cl.: B29C 45/14, B29L 31/00, B29C 45/00, G09F 23/00, G09F 3/04, B65D 1/24

(54) **BEHÄLTER INSBESONDERE FLASCHENKASTEN MIT INMOULD-LABEL; VERFAHREN ZUR HERSTELLUNG DES BEHÄLTERS**
CONTAINER, IN PARTICULAR BOTTLE CASE, HAVING AN IN-MOLD LABEL; METHODE FOR MANUFACTURING THE CONTAINER
CONTENEUR, EN PARTICULIER CASIER À BOUTEILLES PRÉSENTANT UNE ÉTIQUETTE SURMOULÉE; MÉTHODE DE FABRICATION DU CONTENEUR

(30) Priorität: 05.11.2009 DE 202009015066 U
(43) Veröffentlichungstag der Anmeldung: 12.09.2012
(73) Patentinhaber: Schoeller Allibert GmbH, 19057 Schwerin (DE)
(72) Erfinder: LENZ, Thorsten, 14055 Berlin (DE)
(74) Vertreter: Bockhorni & Kollegen
(86) Internationale Anmeldenummer: PCT/EP2010/003142
(87) Internationale Veröffentlichungsnummer: WO 2011/054406

(56) Entgegenhaltungen:
- EP-A2- 1 710 069
- WO-A1-00/42591
- WO-A1-2006/021200
- DE-U1- 20 208 044
- US-A1- 2007 172 664

## Beschreibung

Die Erfindung betrifft einen Behälter, insbesondere einen kastenartigen Transport- und Lagerbehälter gemäß dem Oberbegriff des, Schutzanspruches 1 sowie ein Verfahren zur Herstellung des Behälters.

Behälter, insbesondere Transport- und Lagerkästen, wie etwa Flaschenkästen, aus Kunststoff werden an ihren äußeren Seiten und Flächen sehr häufig mit Inmould-Labels versehen, bei denen es sich um bedruckte Folien oder Folien mit Dekorelementen sog. Dekorfolien handelt, wie dies beispielsweise aus der WO 00142591 oder der EP1710069 A2 bekannt ist. Inmould-Label heißt hierbei, dass diese Labels bzw. Folien während des Spritzgießens des Flaschenkastens aus Kunststoff umspritzt werden, um einen festen Verbund mit dem spritzgegossenen Kunststoffkasten herbeizuführen. Hierzu werden diese Folien, welche zumeinst als Laminat vorliegen, vor dem Spritzgießen des Kunststoffkastens in die entsprechende Spritzgussform eingelegt und dort gehalten, wonach dann der schmelzflüssige Kunststoff in die Form eingespritzt wird, so dass das Label auf seiner Rückseite fest mit dem Kunststoffkasten verbunden wird, wohingegen die in Richtung der Spritzgussform weisende Außenfläche des Labels nicht hinterspritzt wird, vielmehr frei bleibt und damit einen Teil der Außenfläche der Kastenwand bzw. der entsprechenden Seitenwand bildet. Derartige Labels dienen maßgeblich für die Angabe des Herstellers, der im Flaschenkasten transportierten Getränke bzw. Art der Getränke u. dgl. mehr. Häufig werden derartige Labels auch als reine Dekorelemente verwendet, wobei sich die Labels über einen Teil der Seitenwandfläche bzw. über im Wesentlichen die gesamte Seitenfläche erstrecken können.

Es liegt auf der Hand, dass diese nach außen freiliegenden Bedruckungen oder Dekorflächen der Labels im täglichen Umgang und Gebrauch eines solchen Kastens bzw. Behälters beschädigt, zerkratzt oder einem sonstigen Verschleiß unterliegen können. Deswegen werden derartige Inmould-Labels zumeist aus Laminaten ausgebildet, die aus mehreren Folien, Haftschichten und Schutzschichten ausgebildet sind und als solche in die Spritzgussform zwecks Anbindung an den spritzzugießenden Kasten eingelegt werden. Die äußere Schicht dient hierbei als Schutzschicht und die innere Schicht, zumeist als Folie ausgebildet, soll den Verbund mit dem spritzgegossenen Kasten begünstigen. Alternativ können derartige Inmould-Labels an ihren Außenflächen auch mit aufwändigen Schutzlacken versehen sein, um einen entsprechenden Schutz gegen Beschädigungen zu gewährleisten.

Die Ausbildung derartiger Inmould-Labels ist allerdings sehr aufwändig und teuer, wobei in Anbetracht des Umstands, dass es sich bei derartigen Behältnissen oder Flaschenkästen um Massenprodukte handelt, dies natürlich entsprechend ungünstig ins Gewicht fällt.

Aufgabe der Erfindung ist es, einen Behälter, insbesondere Flaschenkasten, zu schaffen, der mit einfachen Maßnahmen einen entsprechenden Schutz von Inmould-Labels gegen Beschädigungen bietet. Hierbei soll auch eine einfache Herstellbarkeit gewährleistet sein.

Diese Aufgabe wird erfindungsgemäß durch die im Anspruch sowie im Anspruch 8 enthaltenen Merkmale gelöst, wobei zweckmäßige Weiterbildungen der Erfindung durch die in den Unteransprüchen enthaltenen Merkmale gekennzeichnet sind.

Die Erfindung zeichnet sich dadurch aus, dass das im spritzgegossenen Kunststoffteil, also Behältnis oder Flaschenkasten, fest angebunden aufgenommene Inmould-Label in einem weiteren Arbeitsgang mit einem Kunststoffüberzug in Art einer Schicht überspritzt wird und zwar vollumfänglich bezüglich der nicht im Behälter eingebetteten Bereiche bzw. nach außen freiliegenden Abschnitten, so dass das Label in diesem gegenüber dem Behälter einbettungsfreien Bereich vollständig von der Schicht abgedeckt und damit vollumfänglich geschützt ist. Der Überzug wird vorzugsweise aufgespritzt. Durch diese separate, also unabhängig vom Inmould-Label aufgebrachte Kunststoffschicht aus vorzugsweise transparentem Kunststoffmaterial erfolgt durch einfache Herstellung ein wirksamer Schutz des in den Kasten eingebetteten Inmould-Labels gegen Kratzer und sonstige Beschädigungen. Erfindungsgemäß ist die Kunststoffschicht als etwas gegenüber der Außenfläche des Kastens erhaben vorspringende Schicht ausgebildet, was insbesondere immer dann der Fall ist, wenn das Inmould-Label mit seiner freiliegenden Außenfläche bündig mit der Außenfläche der Seitenwand des Kastens abschließt. Erfindungsgemäß ist das Inmould-Label gegenüber der Außenfläche der Seitenwand zurückgesetzt angeordnet; der Kunststoffüberzug, der innerhalb der das Inmould-Label aufnehmenden Ausnehmung angeordnet ist, schließt bündig mit der Seitenaußenfläche der Seitenwand des Kastens ab. Aufgrund dieses wirksamen Schutzes genügt es, dass nur eine einzelne Folie verwendet wird, die auch auf einer Seite bedruckt ist, bzw. mit entsprechenden Dekorelementen versehen ist. Im Rahmen der Erfindung liegt es, dass die Folie auf ihrer Rückseite, also der dem Kasten zugewandten Seite entsprechend für einen innigen Verbund mit dem schmelzflüssigen Kunststoff während der spritzgusstechnischen Herstellung des Kastens optimiert ausgelegt wird, was durch eine Back-up-Folie erfolgen kann bzw. einem entsprechenden Überzug auf der Rückseite der Folie.

In einer zweckmäßigen Weiterbildung der Erfindung ist die das Inmould-Label aufnehmende Ausnehmung, die mit einer leicht von der Seitenaußenfläche der Seitenwand vorspringenden Dichtlippe versehen ist, die als Quetschlippe ausgebildet ist und für eine trennscharfe Abgrenzung des nachträglich aufgespritzten Kunststoffs für die Bildung des Kunststoffüberzugs vorgesehen ist. Mit Anlegen der entsprechenden Formwand erfolgt ein leichtes Verquetschen, der im gewissen Sinne nachgiebigen Dichtlippe, wodurch Rückstellkräfte aufgebaut werden, die jegliche Spaltbildung zwischen bereits spritzgegossenem Kasten bzw. der Seitenwand des Kastens und der angelegten Formwand unter dem hohen Spritzgussdruck beim Einspritzen des Kunststoffs für einen Kunststoffüberzug verhindert. Dadurch kann der nachträglich aufgespritzte Kunststoff nicht überströmen, so dass eine Nachbearbeitung nach dem Aufbringen des Kunststoffüberzugs entfallen kann. Auch dadurch begünstigt sich die Herstellung. Die Dicke der Überzugsschicht ist auf ihre Funktion als Schutzschicht ausgelegt, wobei sich als praktikabel eine Dicke im Bereich von 0,1 mm bis 1,5 mm für den Überzug, vorzugsweise von 0,1 mm bis 1 mm herausgestellt hat.

Nachfolgend werden bevorzugte Ausführungsbeispiele der Erfindung anhand der Zeichnung beschrieben.

Darin zeigen in rein schematischer Darstellung
- Fig. 1: einen Teilschnitt durch eine Seitenwand eines Flaschenkastens in einer ersten Ausführungsform,
- Fig. 2: eine weitere Ausführungsform im Teilschnitt der Seitenwand eines Flaschenkastens sowie
- Fig. 3: einen Teilschnitt durch eine weitere Ausführungsform der Erfindung.
- Fig. 4: eine Ansicht mit einer Form zur Anformung des Überzugs.

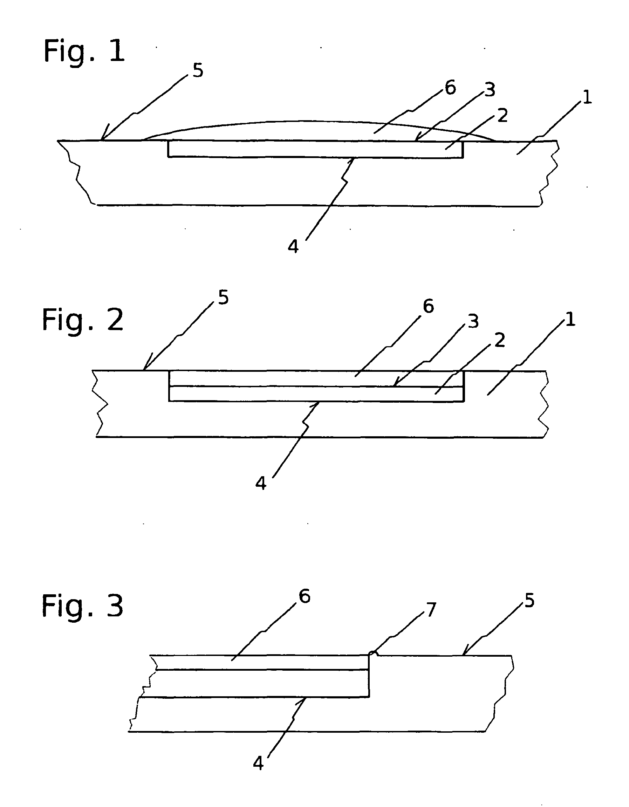

Fig. 1 zeigt einen Teilschnitt durch eine mit 1 bezeichnete Seitenwand eines Flaschenkastens, der üblicherweise aus einem Boden und vier umlaufend angeordneten Seitenwänden ausgebildet und durch Spritzgießen von Kunststoff hergestellt wird. Auf den Außenflächen der Seitenwände werden üblicherweise Angaben über Hersteller also Namen der Brauerei, sowie Art der im Kasten transportierten Getränke in wörtlicher und bildlicher Darstellung angebracht, wozu mehr und mehr sogenannte Inmould-Labels verwendet werden, die aus Folien mit Bedruckung oder Dekorelementen oder Dekorfolien gebildet sind. Nach Maßgabe von Fig. 1 ist das Inmould-Label durch eine Folie 2 gebildet, die hier als einzelne Folie vorliegt und auf ihrer Sichtseite 3 mit einem entsprechenden Druck bzw. Dekor versehen ist. Im übrigen ist das Inmould-Label bzw. die Folie 2 herstellungsbedingt in einer mit 4 bezeichneten Ausnehmung des spritzgegossenen Kastens aufgenommen. An dieser Grenzfläche 4 mit dem spritzgegossenen Kasten ist das Inmould-Label herstellungsbedingt fest mit der Seitenwand des Kastens verbunden. Im dargestellten Ausführungsbeispiel schließt die Folie 2 mit ihrer Außenfläche bündig mit der Außenfläche 5 der Kastenseitenwand 1 ab. Die Folie 2 ist an ihrer freiliegenden Außenseite mit einer Überdrucksschicht 6 aus transparentem Kunststoff überzogen und zwar vollflächig, wobei der Kunststoffüberzug 6 die in den Kunststoff der Kastenseitenwand 1 eingebettete Folie 2 an ihrer freiliegenden, also einbettungsfreien Außenfläche vollständig übergreift und damit sozusagen bzgl. der Seitenwand des Kastens randübergreifend ausgebildet ist. Dadurch ist die Folie 2 mit ihrer bedruckten oder mit einem Dekor versehenen Sichtfläche 3 wirkungsvoll gegen Schädigungen geschützt ohne, dass ein aufwändiger Aufbau des Inmould-Labels erforderlich wäre, was sich letztendlich entsprechend auf die Herstellungskosten eines solchen Kasten auswirkt. Obgleich im dargestellten bevorzugten Ausführungsbeispiel die Folie 2 als einzelne Folie gezeigt und auch beschrieben sowie beansprucht ist, liegt es im Rahmen der Erfindung, dass die Folie auf der Rückseite mit einer weiteren daran anhaftenden Folie versehen ist, welche insbesondere mit Blickpunkt auf den Schmelzverbund mit dem spritzgegossenen Kunststoff des Kastens ausgelegt ist. Die Überlappung der Schicht liegt im Bereich zwischen 0,5- 6 mm, insbesondere 1-3 mm.

Im Ausführungsbeispiel nach Fig. 2 werden für dieselben Bauelemente dieselben Bezugszeichen verwendet. Diese Ausführungsform unterscheidet sich von der nach Fig. 1 dadurch, dass die Folie 2 in der Aufnahmeaussparung 4 des Kastens 1 soweit zurückgesetzt angeordnet ist, dass sich die Sichtfläche 3 in zurückgesetzter Lage gegenüber der Außenfläche 5 der Seitenwand 1 des Kastens befindet. Dadurch kann der Überzug 6, wie in Fig. 2 dargestellt ist, mit der Außenfläche 5 der Seitenwand bündig abschließend in die Ausnehmung 4 eingespritzt sein, so dass er die freiliegende Fläche 3 der Folie 2 vollständig zum Zwecke des Schutzes überdeckt.

Fig. 3 zeigt einer weitere Ausführungsform, bei der um die Ausnehmung 4 umlaufend am Rand eine im gewissen Sinne nachgiebige Dichtlippe 7 angeordnet ist, die als Quetschleiste dient. Beim Schließen der Form für das Aufbringen bzw. Aufspritzen der Überzugsschicht 6 wird die Formwand stark auf die Seitenwand 1 des bereits spritzgegossenen Kastens gedrückt, so dass die Dichtlippe 7 als Quetschleiste zusammen gequetscht wird und dadurch Rückstellkräfte aufgebaut werden, wodurch sicher gestellt ist, dass beim Einspritzen des schmelzflüssigen Kunststoffs zur Bildung der Überzugsschicht 6 unter Druck gleichwohl ein Überströmen des Kunststoffs für die Schutzschicht 6 verhindert und damit eine trennscharfe Abgrenzung zwischen Überzugsschicht 6 und Außenfläche 5 der Seitenwand 1 des Kastens gewährleistet ist. Dadurch vereinfacht sich wiederum der Herstellungsaufwand und es sind nachträgliche Randbearbeitungen entbehrlich.

Die Dicke der Überzugsschicht 6 im Rahmen der Erfindung liegt im Bereich von 0,1 mm bis 1 mm, kann bedarfsweise aber auch bis zu 1,5 mm betragen, was anwendungsspezifisch ist und entsprechend gewählt wird. Wie Fig. 1 schließlich noch zeigt, ist dort die Überzugsschicht 6 nicht mit gleichbleibender Dicke ausgebildet, vielmehr nimmt die Dicke der Überzugsschicht 6 zu den Randseiten der Überzugsschicht 6 zunehmend ab bis in den Übergang der Außenfläche 5 der Kastenseitenwand 1. Im Ausführungsbeispiel nach Fig. 2 weist die Überzugsschicht 6 ebenso wie bei der Ausführungsform gemäß Fig. 3 die gleiche Dicke auf.

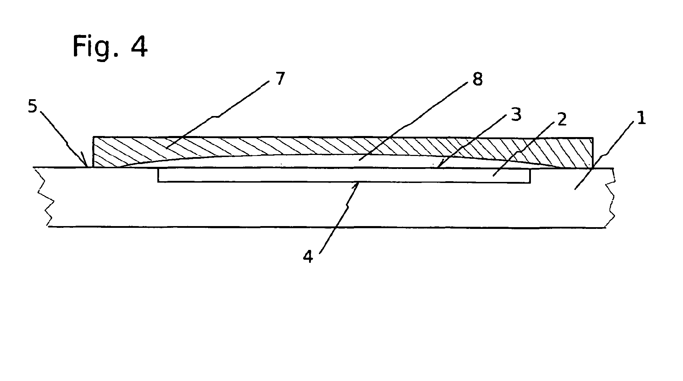

Figur 4 zeigt rein schematisch eine mögliche Form zur Herstellung des Überzugs auf dem Inmould-Label bzw. Folie 2, wobei ersichtlich ein Formstempel den Bereich der Einbettung der Folie 2 überlappend aufgesetzt ist und zwar an der Behälteraußenfläche. Der mit dem Bezugszeichen 7 bezeichnete Stempel schließt einen Formhohlraum 8 mit der Folie 2 und dem Behälter ein, in den dann in üblicher Weise die Kunststoffschicht 6 aufgespritzt wird.

Wie aus Figur 4 ersichtlich ist, überdeckt der Formstempel 7 den Einbettungsbereich der Inmould-Folie 2 insgesamt, erstreckt sich also bis in die Behälteraußenwand, so dass die nach Einspritzen von Kunststoff gebildete Schicht die freiliegende Fläche des Inmould-Labels 2 vollumfänglich überdeckt und einkapselt und damit schützt.

## Patentansprüche

1. Kastenartiger Behälter aus Kunststoff für Transport und Lagerung von Gegenständen, insbesondere Kasten, aus spritzgegossenem Kunststoff mit einem Boden und daran ausgebildeten Seitenwänden mit mindestens einem Inmould-Label an mindestens einer Seitenwand und/oder Eckbereich des Behälters, bei dem das Inmould-Label durch eine bedruckte und/oder mit einem dergleichen Dekor bzw. Dekorelementen versehene Folie, vorzugsweise einlagige Folie, gebildet ist,
**dadurch gekennzeichnet, dass**
eine nach dem Hinterspritzen mit Kunststoff zur Bildung des Behälters freiliegende Außenfläche (3) des Inmould-Labels vollumfänglich mit einem Kunststoffüberzug (6) beschichtet und eingekapselt ist, wobei die Folie (2) vollständig in einer Ausnehmung (4) des Behälters aufgenommen und die Kunststoffüberzugsschicht (6) auf der Folie (2) gegenüber der Behälteraußenfläche (5) erhaben ausgebildet ist und Kunststoffüberzugsschicht die Folie (2) über deren Rand hinaus auf die Behälteraußenfläche überlappt und damit ist Folie (2) vollständig an ihren gegenüber dem Behälter freiliegenden Fläche durch die Kuntstoffüberzugsschicht eingekapselt ist oder dass die Folie (2) in einer Ausnehmung (4) des Behälters zur benachbarten Außenfläche (5) des Behälters zurückgesetzt angeordnet ist und die aufgetragene äußere Kunststoffüberzugsschicht (6) mit der die Ausnehmung (4) umgebenden Behälteraußenfläche (5) bündig abschließend ausgebildet ist, wobei die Kunststoffüberzugsschicht (6) die freiliegende Fläche der Folie (2) vollständig überdeckt.

2. Behälter nach Anspruch 1,
**dadurch gekennzeichnet, dass**
die Kunststoffüberzugsschicht (6) auf die Folie (2) durch Aufspritzen aufgebracht ist.

3. Behälter nach einem der vorhergehenden Ansprüche,
**dadurch gekennzeichnet, dass**
der auf die Folie aufgebrachte Kunststoff transparent ist und zwar zumindest, was die durch die Bedruckung, Dekorelemente oder das Dekor gebildete Fläche der Folie (2) anbelangt.

4. Behälter nach einem der vorhergehenden Ansprüche,
**dadurch gekennzeichnet, dass**
die folienaufnehmende Ausnehmung (4) im Behälter mit einer umlaufenden als von der Behälterfläche vorspringenden Dichtlippe (7) in Art einer Quetschleiste umgeben ist.

5. Behälter nach einem der vorhergehenden Ansprüche,
**dadurch gekennzeichnet, dass**
als Inmould-Label nur eine einzelne Folie verwendet ist, die auf ihrer der Behälteraußenfläche (5) zuweisenden Fläche (3) bedruckt und/oder mit Dekorelementen bzw. einem Dekor versehen ist.

6. Behälter nach einem der vorhergehenden Ansprüche
**dadurch gekennzeichnet, dass**
die Dicke der Kunststoffüberzugsschicht(6) auf der Folie (2) 0,1 mm bis 1,5 mm, vorzugsweise 0,1 mm bis 1 mm beträgt.

7. Behälter nach Anspruch 1
**dadurch gekennzeichnet, dass**
das Maß der Überlappung der Überzugsschicht 0,5- 6 mm, insbesondere 1 - 3 mm beträgt.

8. Verfahren zur Herstellung eines Behälters gemäß einem der vorhergehenden Ansprüche,
**dadurch gekennzeichnet, dass**
über einen Einbettungsbereich der Inmould-Folie (2) ein mit seinem Formhohlraum (8) den Einbettungsbereich vollständig übergreifender Formteil, insbesondere Formstempel (7), vorgesehen ist, der an die Behälteraußenfläche angesetzt ist und in den der Kunststoff für die Überzugsschicht (6) eingespritzt wird.

## Claims

1. A crate-like container out of plastic for transporting and storing objects, in particular crates out of injection-moulded plastic with a bottom and side walls arranged thereto with at least one inmould label at at least one side wall and/or corner section of the container where the inmould label is configured by a foil, preferably a single-sheet foil, which is imprinted and/or provided with a décor or decorating elements of that kind,
**characterized in that**
an outer surface (3) of the inmould label being exposed after back-injection with plastic is completely circumferentially covered and encapsulated with a plastic layer (6) for forming the container, with the foil (2) being completely received in a recess (4) of the container and the plastic cover layer (6) being configured in a raised way on the foil (2) compared with the container outer surface (5) and the plastic cover layer overlaps the foil (2) over the foil's edge to the container outer surface so that the foil (2) is completely encapsulated by the plastic cover layer at its exposed area opposite the container or that the foil (2) is arranged in a repositioned way in a recess (4) of the container towards the neighbouring outer surface (5) of the container and the applied outer plastic cover layer (6) is configured in an even way with the container outer surface (5) surrounding the recess (4), with the cover layer (6) completely covering the exposed surface of the foil (2).

2. The container according to claim 1,
**characterized in that**
the plastic layer (6) is applied onto the foil (2) via injecting.

3. The container according to one of the preceding claims,
**characterized in that**
the plastic material applied onto the foil is transparent, at least as far as the surface of the foil (2) which is formed by printing, decorating elements or the décor is concerned.

4. The container according to one of the preceding claims
**characterized in that**
the recess (4) which receives the foil is surrounded in the container in the kind of a clamping strip with a circumferential sealing lip (7) protruding from the container surface.

5. The container according to one of the preceding claims
**characterized in that**
only one single foil is used as the inmould label, which foil is imprinted on its surface (3) showing towards the container outer surface and/or provided with decorating elements or a décor.

6. The container according to one of the preceding claims
**characterized in that**
the thickness of the plastic coating layer (6) on the foil (2) is 0.1 mm to 1.5 mm, preferably 0.1 mm to 1 mm.

7. The container according to claim 1,
**characterized in that**
the extend of overlapping of the coating layer is 0.5 - 6 mm, in particular 1 to 3 mm.

8. Process for producing a container according to one of the preceding claims
**characterized in that**
via an embedding section of the inmould foil (2), a preform, particularly a form stamp (7) which completely overlaps the embedding section with its cavity (8), is provided, which preform is attached to the container outer surface and into which the plastic for the coating layer (6) is injected.

## Revendications

1. Conteneur de type caisse en matière plastique pour le transport et le stockage d'objets, en particulier caisse, en matière plastique moulée par injection, comprenant un fond et des parois latérales réalisées sur celui-ci, avec au moins une étiquette IML sur au moins une paroi latérale et/ou une zone de coin du conteneur, dans lequel l'étiquette IML est formée par un film, de préférence film à une couche, imprimé et/ou pourvu d'un tel décor ou bien d'éléments de décor,
**caractérisé par le fait**
**qu'**une surface extérieure (3) de l'étiquette IML, qui, après le surmoulage par injection avec de la matière plastique pour former le conteneur, est dégagée, est revêtue et encapsulée, sur toute la circonférence, d'un revêtement en matière plastique (6), le film (2) étant reçu complètement dans un évidement (4) du conteneur et la couche de revêtement (6) sur le film (2) étant réalisée en relief par rapport à la surface extérieure de conteneur (5) et la couche de revêtement en matière plastique recouvrant le film (2) au-delà du bord de celui-ci jusqu'à la surface extérieure de conteneur, et, ainsi, le film (2) étant encapsulé complètement par ladite couche de revêtement en matière plastique sur sa surface dégagée par rapport au conteneur, ou que le film (2) est disposé en retrait par rapport à la surface extérieure (5) voisine du conteneur, dans un évidement (4) du conteneur, et la couche extérieure en matière plastique (6) appliquée est réalisée de manière à être affleurée avec la surface extérieure de conteneur (5) qui entoure ledit évidement (4), la couche de revêtement (6) recouvrant complètement la surface dégagée du film (2).

2. Conteneur selon la revendication 1, **caractérisé par le fait que** ladite couche de revêtement en matière plastique (6) est appliquée par projection sur le film (2).

3. Conteneur selon l'une quelconque des revendications précédentes, **caractérisé par le fait que** la matière plastique appliquée sur le film est transparente, à savoir au moins en ce qui concerne la surface du film (2) formée par impression, des éléments de décor ou le décor.

4. Conteneur selon l'une quelconque des revendications précédentes, **caractérisé par le fait que** ledit évidement (4) dans le conteneur, qui reçoit le film est entouré d'une lèvre d'étanchéité (7) (à la manière d'une bande d'écrasement) s'étendant tout autour et faisant saillie de la surface du conteneur.

5. Conteneur selon l'une quelconque des revendications précédentes, **caractérisé par le fait qu'**on n'utilise qu'un seul film en tant qu'étiquette IML qui est imprimé et/ou pourvu d'éléments de décor ou bien d'un décor sur sa surface (3) montrant vers la surface extérieure de conteneur (5).

6. Conteneur selon l'une quelconque des revendications précédentes, **caractérisé par le fait que** l'épaisseur du revêtement en matière plastique (6) sur le film (2) est comprise entre 0,1 mm et 1,5 mm, de préférence entre 0,1 mm et 1 mm.

7. Conteneur selon la revendication 1, **caractérisé par le fait que** la mesure du recouvrement de la couche de revêtement est comprise entre 0,5 et 6 mm, en particulier entre 1 et 3 mm.

8. Procédé de fabrication d'un conteneur selon l'une quelconque des revendications précédentes, **caractérisé par le fait que** sur la zone d'encastrement du film IML (2) est prévu(e) une partie de moule, en particulier un moule mâle (7) qui, par son creux de moule (8), s'étend complètement sur la zone d'encastrement et qui est appliqué sur la surface extérieure du conteneur et dans lequel la matière plastique pour la couche de revêtement (6) est injectée.
